# EUROPÄISCHE PATENTSCHRIFT

(11) **EP 3 402 737 B1**
(45) Veröffentlichungstag und Bekanntmachung des Hinweises auf die Patenterteilung: **11.11.2020**
(21) Anmeldenummer: 17700343.1
(22) Anmeldetag: 12.01.2017
(51) Int. Cl.: B67D 1/08

(54) **KARTUSCHENAUFNAHME, KARTUSCHENSYSTEM, GETRÄNKEZUBEREITUNGSMASCHINE UND VERFAHREN ZUR HERSTELLUNG EINES GETRÄNKS**
CARTRIDGE RECEIVER, CARTRIDGE SYSTEM, DRINK PREPARATION MACHINE AND METHOD FOR PRODUCING A DRINK
LOGEMENT DE CARTOUCHE, SYSTÈME DE CARTOUCHE, MACHINE DE PRÉPARATION DE BOISSONS ET PROCÉDÉ DE PRÉPARATION D'UNE BOISSON

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 21.11.2018
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter
(86) Internationale Anmeldenummer: PCT/EP2017/050565
(87) Internationale Veröffentlichungsnummer: WO 2017/121800

(56) Entgegenhaltungen:
- EP-A1- 2 080 454
- WO-A2-2013/036564
- GB-A- 2 033 333
- US-A1- 2012 121 780

## Beschreibung

### Stand der Technik

Die vorliegende Erfindung geht aus von einem in eine Getränkezubereitungsmaschine einsetzbares Kartuschensystem zur Herstellung eines Getränks, insbesondere eines Kaltgetränks, aufweisend eine Kartusche, die ein mit einer Getränkesubstanz gefülltes Reservoir aufweist, und eine mit der Kartusche reversibel verbindbare Kartuschenaufnahme, in welche die Kartusche reversibel einsetzbar ist, und mit einer Kartuschenentladeeinrichtung, welche ein zumindest teilweises Überführen der Getränkesubstanz vom Reservoir in eine Mischkammer bewirkt.

Solche Systeme sind aus dem Stand der Technik grundsätzlich bekannt, etwa aus der EP2 080 454 oder der WO 2013/036564, und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine große Herausforderung bei solchen Systemen ist, während der Herstellung des Getränks eine Rückkontamination der Getränkezubereitungsmaschine sicher und vollständig zu unterbinden, da andernfalls die Gefahr einer Verunreinigung bis hin zur Schimmelpilzbildung innerhalb der Getränkezubereitungsmaschine besteht. Dies gilt insbesondere für Kartuschen die fruchtzuckerhaltige, alkoholhaltige oder milchhaltige Getränkesubstanzen enthalten.

Bei aus dem Stand der Technik bekannten Systemen wird üblicherweise die Kartusche in eine als fester Bestandteil der Getränkezubereitungsmaschine ausgebildete Kartuschenaufnahme eingesetzt und sodann die Kartusche auf beiden Seiten, d.h. auf einer Einlassseite und auf einer Auslassseite geöffnet. Auf der Einlassseite wird anschließend mittels einer Fluidzuführung Wasser in die Kartusche eingeleitet, so dass sich das Getränk durch Vermischen der Getränkesubstanz mit dem Wasser schon innerhalb des Reservoirs in der Kartusche bildet. Auf der Auslassseite verlässt das Getränk die Kartusche und wird zu einem Trinkgefäß geleitet. Das Wasser durchströmt das Reservoir hierbei vollständig und bewirkt somit ein Ausleiten der Getränkesubstanz aus dem Reservoir.

Es hat sich gezeigt, dass beim Einleiten des Wassers direkt in das mit der Getränkesubstanz gefüllte Reservoir eine Rückkontamination der Zuführung nicht vollständig verhindert werden kann, weil das Reservoir üblicherweise vollständig mit der Getränkesubstanz gefüllt ist und dadurch beim Einleiten des Wassers ein erheblicher Druckanstieg im Reservoir stattfindet. Sowohl dieser Druckanstieg im Reservoir als auch das Durchspülen des Reservoirs sorgt dafür, dass während und/oder kurz nach der Getränkeherstellung kleinste Tropfen, Partikel und/oder Schwebestoffe der Getränkesubstanz in die Fluidzuführung gelangen und dort zu einer kontinuierlichen Verunreinigung der Getränkezubereitungsmaschine führen.

Eine weitere Problematik besteht darin, die Kartusche nach der Befüllung mit der Getränkesubstanz luft- und flüssigkeitsdicht zu verschließen, damit das Aroma der Getränkesubstanz erhalten bleibt. Gleichzeitig muss aber auch gewährleistet werden, dass die Kartusche in der Getränkezubereitungsmaschine leicht, zuverlässig und vollständig wieder geöffnet werden kann, um die Getränkesubstanz verwenden zu können.

### Offenbarung der Erfindung

Es ist daher eine Aufgabe der vorliegenden Erfindung eine Kartuschenaufnahme, ein Kartuschensystem, eine Getränkezubereitungsmaschine und ein Verfahren zur Herstellung eines Getränks durch Einsetzen des Kartuschensystems in eine Getränkezubereitungsmaschine zur Verfügung zu stellen, bei welchem eine Rückkontamination der Getränkezubereitungsmaschine wirksam vermieden wird sowie eine einfache und zuverlässige Öffnung einer zuvor aromadicht verschlossenen Kartusche in einer Getränkezubereitungsmaschine ermöglicht.

Diese Aufgabe wird durch eine Kartuschenaufnahme gemäß Anspruch 1 gelöst.

Die erfindungsgemäße Kartuschenaufnahme und das erfindungsgemäße Kartuschensystem haben gegenüber dem Stand der Technik den Vorteil, dass die Fluidzuführung anders als beim Stand der Technik nicht in das Reservoir der Kartusche, sondern in die vom Reservoir separierte Mischkammer mündet. Hierdurch wird wirksam und in einer einfach und kostengünstig zu realisierenden Weise verhindert, dass durch die Fluidzuführung eine Rückkontamination der Getränkezubereitungsmaschine erfolgt. Hierfür wird das Reservoir nicht von dem Fluid durchspült, sondern gemäß der vorliegenden Erfindung gelangen die Getränkesubstanz und das Fluid getrennt voneinander in die Mischkammer. Das Fluid wird direkt in die Mischkammer geleitet, während die Getränkesubstanz durch die Kartuschenentladeeinrichtung und unabhängig vom Fluid in die Mischkammer überführt wird. Zu diesem Zweck weist die erfindungsgemäße Kartuschenaufnahme ferner den in der Dornführung verschiebbar gelagerten Aufstechdorn auf. Der Aufstechdorn ist im Ausgangszustand der Kartuschenaufnahme in einer eingefahrenen Position und kann zum Öffnen eines Dichtelements der Kartusche von der eingefahrenen Position in die ausgefahrene Position überführt werden. In der ausgefahrenen Position wird das Dichtelement von dem Aufstechdorn perforiert, so dass die Getränkesubstanz durch den wenigstens einen Seitenkanal an dem Dichtelement vorbei in die Mischkammer gelangt. Zuvor ist das Reservoir mittels des Dichtelements insbesondere luft- und flüssigkeitsdicht verschlossen. Es wird somit eine einfache und zuverlässige Öffnung einer zuvor aromadicht verschlossenen Kartusche in einer Getränkezubereitungsmaschine ermöglicht. Zudem hat sich gezeigt, dass eine Rückkontamination der Getränkezubereitungsmaschine in einer im Vergleich zum Stand der Technik deutlich wirksameren Art und Weise unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass der Aufstechdorn ein zylinder- oder kegelstumpfförmiges Basisteil und ein sich in Richtung des Reservoirs erstreckendes Aufstechteil umfasst, wobei das Aufstechteil in Form eines schräg abgeschnittenen Kegelstumpfs ausgebildet ist. Vorzugsweise ist das Aufstechteil ferner derart ausgebildet ist, dass eine schräge Schnittfläche des schräg abgeschnittenen Kegelstumpfs im Wesentlichen dem Reservoir zugewandt ist, wobei der ovale Umfang der Schnittfläche zumindest teilweise eine Schnittkante zum Perforieren des Dichtelements darstellt. Es hat sich gezeigt, dass die Schnittfläche, welche durch einen schrägen Schnitt durch den Kegelstumpf erzeugt wird, einerseits das Dichtelement einfach und mit ausreichend wenig Kraftaufwand schneidet und andererseits keine Späne oder lose Stücke von dem Dichtelement abtrennt, welche ansonsten das Getränk in ungewollter Weise verunreinigen würden. Die Dichtelementperforation sieht vorteilhafterweise derart aus, dass an derjenigen Seite des Aufstechdorns, an welchem die maximal in Richtung des Reservoirs überstehende Schnittkante ausgebildet ist, das Material des Dichtelements mit einem glatten Schnitt durchtrennt ist, während im Bereich der Schnittfläche des Aufstechteils das abgeschnittene Material des Dichtelements noch mit dem übrigen Dichtelement verbunden ist und vorzugsweise aufrollt oder zusammengefaltet ist.

Vorzugsweise umfasst der Aufstrechdorn ein zwischen dem Basisteil und dem Aufstechteil angeordnetes Zwischenteil, welcher kegelstumpfförmig ausgebildet ist, wobei zwischen dem Basisteil und dem Zwischenteil eine umlaufender Absatz ausgebildet ist und wobei zwischen dem Aufstechteil und dem Zwischenteil eine umlaufende Kante ausgebildet ist. Vorteilhafterweise wird somit ein stabiler Aufstechdorn gebildet. Der Ausbildung der Kante hat den Vorteil, dass die Seitenkanäle, sofern sie sich über die Kante erstrecken, reservoirseitig einen vergrößerten Eingang aufweisen und somit die Überführung der Getränkesubstanz in Richtung Mischkammer erleichtert wird. Der Absatz dient dazu gegen einen Anschlag der Dornführung anzuschlagen, wenn der Aufstechdorn in der aufgefahrenen Position ist, sodass die Ausfahrbewegung des Aufstechdorns in Richtung der Kartusche begrenzt wird.

Gemäß einer bevorzugten Ausführungsform der vorliegenden Erfindung ist vorgesehen, dass die Kartuschenaufnahme eine Mehrzahl von Seitenkanälen aufweist, wobei sich jeder Seitenkanal parallel zum Aufstechdorn im Bereich des Aufstechteils und im Bereich des Zwischenteils erstreckt. Die Seitenkanäle sind dabei insbesondere jeweils in Form einer in die Außenfläche des Aufstechdorns eingebrachte einseitig offene Nut ausgebildet. Vorzugsweise sind die Seitenkanäle zumindest teilweise in einem zur Schnittfläche rückwärtigen Umfangsbereich des Aufstechdorns ausgebildet. Dies hat den Vorteil, dass die Seitenkanäle an derjenigen Seite der Dichtelementperforation angeordnet sind, an welcher ein Schnitt im Material erzeugt wurde, und nicht an der gegenüberliegenden Seite, an welcher das abgeschnittene Material noch mit dem übrigen Dichtelement verbunden ist. Die Getränkesubstanz kann somit vergleichsweise ungehindert in die Seitenkanäle einströmen.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Gemäß einer bevorzugten Ausführungsform der vorliegenden Erfindung ist vorgesehen, dass der Aufstechdorn eine Verdrehsicherung in Form eines vom Basisteil radial abstehenden Steges aufweist. In vorteilhafter Weise wird somit eine Verdrehung des Aufstechdorns bei der Überführung von der eingezogenen Position in die ausgefahrene Position verhindert. Zudem wird sichergestellt, dass die Seitenkanäle auf derjenigen Seite des Aufstechdorns angeordnet ist, welche dem Getränkeauslauf der Mischkammer abgewandt und insbesondere der Fluidzuführung zugewandt ist. Auf diese Weise wird eine verbesserte Durchmischung der Getränkesubstanz und dem Fluid innerhalb der Mischkammer erzielt.

Gemäß einer bevorzugten Ausführungsform der vorliegenden Erfindung ist vorgesehen, dass der Aufstechdorn eine integrierte Druckluftleitung, welche die Kartuschenentladeeinrichtung ist, aufweist, wobei sich die Druckluftleitung entlang des Aufstechdorns insbesondere von einem ersten Ende des Aufstechdorns bis zu einem zweiten Ende des Aufstechdorns erstreckt. In vorteilhafter Weise sind somit drei Funktionen in den Aufstechdorn integriert: 1. Der Aufstechdorn umfasst den Aufstechteil, um das Dichtelement zu perforieren und somit die Kartusche zu öffnen 2. Der Aufstechdorn umfasst die Seitenkanäle, um ein Überführen der Getränkesubstanz in die Mischkammer zu ermöglichen 3. Der Aufstechdorn umfasst die integrierte Druckluftleitung, um Druckluft in das Reservoir zu blasen, wodurch die Getränkesubstanz unter Druck in die Mischkammer gedrückt wird.

Vorzugsweise ist am zweiten Ende ein Druckluftanschluss zum Anschluss an eine Druckluftquelle und am ersten Ende ein Druckluftauslass zum Einblasen von Druckluft in das Reservior ausgebildet. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Die Kartuschenaufnahme ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Gemäß einer bevorzugten Ausführungsform der vorliegenden Erfindung ist vorgesehen, dass der Druckluftauslass als Öffnung in der Schnittfläche ausgebildet ist. Dies hat den Vorteil, dass die in das Reservoir einströmende Luft auf einer den Seitenkanälen abgewandten Seite des Aufstechdorns eingeblasen wird, so dass das Ableiten der Getränkesubstanz in die Mischkammer nicht behindert wird. Vorzugsweise bildet sich im Reservoir somit ein Wirbel aus, welche eine nahezu restlose Entleerung des Reservoirs begünstigt.

Der Druckluftanschluss ist insbesondere als Öffnung im Basisteil ausgebildet, wobei der Basisteil derart in der Kartuschenaufnahme angeordnet ist, dass der Druckluftanschluss von außerhalb der Kartuschenaufnahme zugänglich ist. Auf diese Weise wird das Anschließen der Druckluftleitung an die Druckluftquelle begünstigt.

Gemäß einer bevorzugten Ausführungsform der vorliegenden Erfindung ist vorgesehen, dass die Dornführung ein Führungsteil mit einem innenliegenden Führungskanal zur Aufnahme des Aufstechdorns aufweist, wobei der Führungskanal des Führungsteils im Wesentlichen zylinder- oder kegelstumpfförmig ausgebildet ist und wobei an einem der Kartusche zugewandten Ende des Führungsteils ein umlaufender Anschlag ausgebildet ist, welcher die Bewegung des Aufstechdorns in Richtung des Reservoirs begrenzt, wobei der Anschlag insbesondere einen Bereich mit verringertem Durchmesser umfasst. Vorteilhafterweise wird somit eine zuverlässige Führung des Aufstechdorns bei der Bewegung von der eingefahrenen Position in die ausgefahrene Position erzielt. Vorzugsweise ist innerhalb der Wandung des Führungskanals eine zum Steg korrespondierende Nut als Verdrehsicherung ausgebildet, so dass eine ungewollte Verdrehung des Aufstechdorns unterbunden wird. Das Führungssteil ist vorzugsweise in der Mischkammer angeordnet und steht dabei von einem Boden der Mischkammer in Richtung der Kartusche vor.

Gemäß einer bevorzugten Ausführungsform der vorliegenden Erfindung ist vorgesehen, dass der Aufstechdorn als Kunststoffteil und insbesondere als Kunststoff-Spritzgussteil ausgebildet ist. Auf diese Weise wird eine kostengünstige Herstellung ermöglicht. Grundsätzlich wäre es alternativ aber auch denkbar, den Aufstechdorn als Metallteil auszubilden.

Gemäß einer bevorzugten Ausführungsform der vorliegenden Erfindung ist vorgesehen, dass der Aufstechdorn derart ausgebildet ist, dass er beim Einsetzen des Kartuschensystems in die Getränkezubereitungsmaschine von einem Auslöseelement der Getränkezubereitungsmaschine von der eingefahrenen Position in die ausgefahrene Position überführbar ist.

Gemäß einer bevorzugten Ausführungsform der vorliegenden Erfindung ist vorgesehen, dass die Kartusche eine mit dem Reservoir in Fluidverbindung stehende Kartuschenöffnung aufweist, wobei die Kartuschenöffnung im Ausgangszustand durch das Dichtelement verschlossen ist, wobei das Dichtelement insbesondere eine Dichtfolie umfasst, die auf den Rand der Kartuschenöffnung aufgebraucht und vorzugsweise aufgesiegelt ist. In vorteilhafter Weise wird somit das Reservoir hermetisch und aromadicht verschlossen. Die Dichtfolie ist hierfür insbesondere weitgehend luft- und flüssigkeitsdicht ausgebildet. Zur Herstellung dieses Kartuschensystems wird zunächst die Kartusche mit der Kartuschenöffnung erzeugt, dann die Kartusche durch die Kartuschenöffnung mit der Getränkesubstanz befüllt, anschließend die Kartuschenöffnung durch das Dichtelement verschlossen und zuletzt die Kartuschenaufnahme auf die Kartusche im Bereich der verschlossenen Kartuschenöffnung aufgeclipst. Vor, während oder nach dem Einsetzen des Kartuschensystems in die Getränkezubereitungsmaschine muss das Dichtelement im Bereich der Kartuschenöffnung geöffnet werden, beispielsweise durch Perforieren der Dichtfolie durch den Aufstechdorn, damit die Getränkesubstanz durch Einleiten der Druckluft vom Reservoir in die Mischkammer überführt werden kann.

Vorzugsweise ist vorgesehen, dass die Mischkammer einen Getränkeauslauf aufweist, durch welchen das aus einer Vermischung der Getränkesubstanz mit dem Fluid gebildete Getränk abgegeben wird, wobei die Kartuschenaufnahme vorzugsweise derart ausgebildet ist, dass das Getränk aus dem Getränkeauslauf direkt in ein portables Gefäß einleitbar ist.

Kartuschenaufnahme nach einem der vorhergehenden Ansprüche, wobei die Kartuschenaufnahme mit der Kartusche über eine Rastverbindung lösbar verbindbar ist. Vorzugsweise ist die Kartuschenaufnahme demnach reversibel an der Kartusche befestigt, besonders bevorzugt durch die Rastverbindung. Denkbar ist beispielsweise, dass die Kartusche eine Art Flaschenhals (aufweisend die Kartuschenöffnung) mit einem umlaufenden Halteflansch umfasst und die Kartuschenaufnahme auf den Flaschenhals geclipst wird. Dabei hintergreifen insbesondere elastische Rastelemente, wie beispielsweise Halteärmchen den Halteflansch. Die Kartusche ist insbesondere als Einmalbehältnis für die Getränkesubstanz vorgesehen, insbesondere recycelbar. Vorteilhafterweise kann die Kartuschenaufnahme mehrfach verwendet werden, indem sie an verschiedenen Kartuschen befestigbar ist. Zudem wird die Herstellung des Kartuschensystem vereinfacht, da die Kartusche und die Kartuschenaufnahme separat hergestellt werden können und lediglich die Kartuschenaufnahme anschließend auf die Kartusche aufgeclipst wird. Die Kartusche umfasst insbesondere eine eckige, runde oder abgerundete Flasche. Die Kartusche ist insbesondere aus Kunststoff in einem Blas-Spritzform-Formverfahren oder in einem Spritzformverfahren oder mit weiteren Formverfahren hergestellt. Grundsätzlich wäre aber auch ein Tiefziehverfahren zur Herstellung der Kartusche vorstellbar. Ebenso wäre es natürlich auch denkbar, dass die Kartusche mehrfach verwendbar ist. Im Prinzip wäre es auch denkbar, dass die Kartusche eine Glasflasche umfasst, während nur die Kartuschenaufnahme ein Kunststoffteil ist.

Gemäß einer weiteren bevorzugten Ausführungsform der vorliegenden Erfindung ist vorgesehen, dass die Mischkammer einen Getränkeauslauf aufweist, durch welchen das aus einer Vermischung der Getränkesubstanz mit dem Fluid gebildete Getränk abgegeben wird, wobei das Kartuschensystem vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt. Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Gemäß einer bevorzugten Ausführungsform der vorliegenden Erfindung ist vorgesehen, dass die Mischkammer mit Mischstrukturen versehen ist. Die Mischstrukturen sorgen in vorteilhafter Weise für eine verbesserte Durchmischung von Getränkesubstanz und Fluid. Hierfür sind die Mischstrukturen insbesondere derart ausgebildet, dass das in die Mischkammer einströmende Fluid verwirbelt wird. Denkbar ist, dass die Mischstruktur einen oder mehrere Mischstege umfasst, welche im Bereich der Fluidzuführung am Boden der Mischkammer angeordnet sind und sich im Wesentlichen senkrecht zum Einströmrichtung des Fluides erstrecken. Die Mischstege fungieren somit als Barrieren für das Fluid, wodurch das Fluid aufgewirbelt wird und eine bessere Durchmischung mit der Getränkesubstanz erzielt wird.

Gemäß einer weiteren bevorzugten Ausführungsform der vorliegenden Erfindung ist vorgesehen, dass die Fluidzuführung mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungsmaschine in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungsmaschine um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Gemäß einer weiteren bevorzugten Ausführungsform der vorliegenden Erfindung ist vorgesehen, dass die Fluidzuführung mit Fluid gespeist wird, welches durch einen Karbonisierer mit Kohlensäure versetzt wird. Denkbar ist, dass der Karbonisierer Teil der Getränkezubereitungsmaschine ist und wobei der Karbonisierer eine Aufnahme für eine CO₂-Patrone und eine Zuführeinrichtung zum Versetzen des Fluides mit CO₂ aus der CO₂-Patrone aufweist. Vorteilhafterweise lassen sich mit dem System somit auch mit Kohlensäure versetzte Erfrischungsgetränke herstellen. Alternativ wäre auch denkbar, dass der Karbonisierer einen externen CO₂-Anschluss aufweist.

Gemäß einer bevorzugten weiteren Ausführungsform der vorliegenden Erfindung ist vorgesehen, dass die Kartusche auf einer der Kartuschenöffnung gegenüberliegenden Seite eine weitere Kartuschenöffnung aufweist, welche durch ein weiteres Dichtelement, insbesondere eine weitere Dichtfolie, verschlossen ist. In vorteilhafter Weise kann die Kartusche somit auch in einem günstigen Spritzformverfahren hergestellt werden.

Gemäß einer bevorzugten Ausführungsform der vorliegenden Erfindung ist vorgesehen, dass die Kartusche und/oder die Kartuschenaufnahme eine Produktidentifikationskennung aufweist und die Getränkezubereitungsmaschine oder die Kartuschenaufnahme einen Kennungsdetektor zum Identifizieren der Produktidentifikationskennung aufweist. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Der Kennungsdetektor umfasst insbesondere einen optischen Sensor, wie beispielsweise eine CCD-Kamera, welche den Barcode oder QR-Code oder Data-Matrix-Code automatisch ausliest, wenn die Kartusche in die Getränkezubereitungsmaschine eingesetzt ist. Alternativ umfasst der Kennungsdetektor eine Sende- und Empfangsantenne zum automatischen Auslesen der RFID-Codes. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code. Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard.

Die Produktidentifikationskennung dient insbesondere dazu, die in der Kartusche befindliche Getränkesubstanz anzugeben. Während oder vor dem Start des Getränkezubereitungsprozesses wird die Produktidentifikationskennung mit dem Kennungsdetektor ausgelesen. Auf Seiten der Getränkezubereitungsmaschine ist somit bekannt, welche Art von Kartusche in die Getränkezubereitungsmaschine eingelegt ist. Denkbar ist, dass eine Auswerte- und Steuereinheit der Getränkezubereitungsmaschine eine Vielzahl von vorgespeicherten Getränkeherstellungsprogrammen aufweist, welche zur Zubereitung unterschiedlicher Getränke vorgesehen sind und sich beispielsweise in der Fördermenge, Förderzeit, Förderpausen, Temperatur, Karbonisierungsgrad und/oder Druck des zugeführten Fluids voneinander unterscheiden. Denkbar ist auch, dass bei verschiedenen Getränkeherstellungsprogrammen unterschiedliche Druckluftzufuhren Verwendung finden (bspw. anderer Druck). Jedes Getränkeherstellungsprogramm ist mit einem oder mehreren Produktidentifikationskennungen verknüpft. Wenn eine Kartusche in die Getränkezubereitungsmaschine eingelegt wird, wird die Produktidentifikationskennung auf der Kartusche mit dem Kennungsdetektor ausgelesen und anschließend mit den vorgespeicherten Daten verglichen. Anhand der Produktidentifikationskennung wird somit ein Getränkeherstellungsprogramm aus der Mehrzahl von vorgespeicherten Getränkeherstellungsprogrammen ausgewählt und anschließend der Getränkeherstellungsprozess mit dem ausgewählten Getränkeherstellungsprogramm gestartet. Die Parameter wie Fördermenge, Förderzeit, Förderpausen, Temperatur, Karbonisierungsgrad und/oder Druck des zugeführten Fluids werden durch das ausgewählte Getränkeherstellungsprogramm vorgegeben bzw. gesteuert, um für das mit der jeweiligen Getränkesubstanz herzustellende Getränk optimale Ergebnisse zu erzielen.

Denkbar ist, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systemfremde Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Ein weiterer Gegenstand der vorliegenden Erfindung ist ein Kartuschensystem zur Herstellung eines Getränks, wobei das Kartuschensystem in die Getränkezubereitungsmaschine einsetzbar ist, wobei das Kartuschensystem die Kartusche, die das mit der Getränkesubstanz gefülltes Reservoir umfasst, und die mit der Kartusche verbundene erfindungsgemäße Kartuschenaufnahme aufweist.

Ein weiterer Gegenstand der vorliegenden Erfindung zur Lösung der eingangs gestellten Aufgabe ist eine Getränkezubereitungsmaschine, in welche das erfindungsgemäße Kartuschensystem einsetzbar ist, wobei die Getränkezubereitungsmaschine eine Halteeinheit aufweist, in welche die mit der Kartusche verbundene Kartuschenaufnahme einsetzbar ist, eine Fluidquelle zum Einspeisen des Fluid in die Fluidzuführung und eine Druckluftquelle zum Einblasen von Druckluft in den Druckluftanschluss. Vorzugsweise weist die Getränkezubereitungsmaschine das Auslöseelement zum Überführen der Aufstechdorns von der eingefahrenen Position in die ausgefahrene Position auf.

Vorzugsweise ist das Auslöseelement derart feststehend ausgebildet, dass durch eine Bewegung der Kapselaufnahme relativ zum Auslöseelement der Aufstechdorn von der eingefahrenen Position in die ausgefahrene Position überführt wird. Die Halteeinheit umfasst hierfür insbesondere einen Befestigungsflansch umfasst, welcher die Kartuschenaufnahme beim oder nach dem Einsetzen in die Halteeinheit umgreift, und wobei der Befestigungsflansch mit einer manuell oder motorisch betriebenen Auslösemechanik gekoppelt ist, welche zum Verschieben des Befestigungsflansches derart vorgesehen ist, dass eine Relativbewegung zwischen Kapselaufnahme und dem in Kontakt mit dem Aufstechdorn stehenden Auslöseelement erzeugt wird, wodurch der Aufstechdorn von der eingefahrenen Position in die ausgefahrene Position überführt wird. Die Kartuschenaufnahme wird von dem Befestigungsflansch also gegen das feststehende Auslöseelement bewegt, so dass das feststehende Auslöseelement gegen den Aufstechdorn drückt und diesen von der eingefahrenen Position in die ausgefahrene Position verfährt. Hierdurch wird die Dichtfolie perforiert und der Getränkeherstellungsprozess beginnt.

Vorzugsweise weist die Getränkezubereitungsmaschine die Auswerte- und Steuereinheit auf, welche mit dem Kennungsdetektor gekoppelt ist und zum Bestimmen der Produktidentifikationskennung durch Analyse des detektierten QR-Codes vorgesehen ist. Vorzugsweise ermittelt die Auswerteelektronik aus dem QR-Code den GS1-Code, welcher eine eindeutige Identifizierung der in der Getränkezubereitungsmaschine angeordneten Kartusche erlaubt. Die Getränkezubereitungsmaschine weist vorzugsweise ferner eine Vergleichseinheit auf, welche zum Vergleichen der bestimmten Produktidentifikationskennung mit einer Liste von vorgespeicherten Produktidentifikationskennungen vorgesehen ist und anhand des Vergleichs ein Getränkeherstellungsprogramm auswählt. Alternativ ist denkbar, dass die Getränkezubereitungsmaschine eine Algorithmus-Erkennung aufweist, welche anhand eines Algorithmus erkennt, ob der detektierte QR-Code systemzugehörig (also bekannt) oder systemfremd ist. Der Algorithmus funktioniert dabei nach den bekannten kryptographischen Ver-/Entschlüsselungsverfahren.

Ein weiterer Gegenstand der vorliegenden Erfindung zur Lösung der eingangs gestellten Aufgabe ist ein Verfahren zur Herstellung eines Getränks mit dem erfindungsgemäßen Kartuschensystem, mit den folgenden Schritten:
- Einsetzen des Kartuschensystems in eine Halteeinheit einer Getränkezubereitungsmaschine,
- Herstellen einer Fluidverbindung zwischen einer Fluidquelle der Getränkezubereitungsmaschine und der Fluidzuführung der Kartuschenaufnahme,
- Herstellen einer Druckluftverbindung zwischen einer Druckluftquelle der Getränkezubereitungsmaschine und des Druckluftanschlusses der Kartuschenaufnahme,
- Perforieren des Dichtelements durch Überführen des Aufstechdorns von der eingefahrenen Position in die ausgefahrene Position,
- Überführen der Getränkesubstanz von dem Reservoir in die Mischkammer durch Einspeisen von Druckluft in das Reservoir,
- Einspeisen eines Fluides in die Mischkammer durch die Fluidzugührung und
- Ableiten des in der Mischkammer durch Vermischung der Getränkesubstanz mit dem Fluid erzeugten Getränks mittels eines Getränkeauslaufs.

Die vorstehend aufgeführten Verfahrensschritte sind nicht als zwingende zeitliche Abfolge zu betrachten, sondern können auch gleichzeitig oder in anderer Reihenfolge erfolgen. Vorzugsweise werden beispielsweise die Betätigung der Kartuschenentladeeinrichtung und die Einspeisung des Fluides parallel durchgeführt.

Vorzugsweise wird das Fluid vor dem Einspeisen in die Mischkammer gekühlt und/oder karbonisiert wird, so dass Kaltgetränke und kohlensäurehaltige Softdrinks herstellbar sind.

Gemäß einer bevorzugten weiteren Ausführungsform der vorliegenden Erfindung ist vorgesehen, dass vor, beim oder nach dem Einsetzen des Kartuschensystems in die Halteeinheit ein Aufstechdorns der Kartuschenaufnahme von einer eingefahrenen Position in eine ausgefahrene Position überführt wird und somit von dem Aufstechdorn ein Dichtelement an der Kartuschenöffnung perforiert wird. In vorteilhafter Weise wird das Reservoir somit automatisch geöffnet, so dass ein Überführen der Getränkesubstanz in die Mischkammer erfolgen kann. Vorzugsweise wird während des Öffnungsvorgangs bereits Druckluft und Fluid in die Kartuschenaufnahme eingeleitet, so dass eine Rückkontamination der Getränkezubereitungsmaschine durch Getränkesubstanz verhindert wird.

Vorzugsweise wird der Aufstechdorn von einem Auslöseelement der Getränkezubereitungsmaschine von der eingefahrenen Position in die ausgefahrene Position überführt, wobei die Kartuschenaufnahme vorzugsweise derart gegen das feststehende Auslöseelement bewegt wird, dass der Aufstechdorn von der eingefahrenen Position in die ausgefahrene Position überführt wird.

Gemäß einer bevorzugten Ausführungsform der vorliegenden Erfindung ist vorgesehen, dass die Kartuschenaufnahme beim oder nach dem Einsetzen des Kartuschensystems in die Halteeinheit von einem Befestigungsflansch der Halteeinheit umgriffen wird und wobei der Befestigungsflansch von einer manuell oder motorisch betriebenen Auslösemechanik derart betrieben und insbesondere verschoben wird, dass eine Relativbewegung zwischen der Kapselaufnahme und dem in Kontakt mit dem Aufstechdorn stehenden Auslöseelement erzeugt wird, wodurch der Aufstechdorn von der eingefahrenen Position in die ausgefahrene Position überführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt das Grundprinzip des Verfahrens zur Herstellung eines Getränks mit einer Kartuschenaufnahme und einem Kartuschensystem eingesetzt in eine Getränkezubereitungsmaschine gemäß einer beispielhaften Ausführungsform der vorliegenden Erfindung.
- Figuren 2a bis 2c: zeigen schematische Ansichten einer Kartusche, einer Kartuschenaufnahme und eines Kartuschensystems gemäß einer beispielhaften Ausführungsform der vorliegenden Erfindung.
- Figuren 3a bis 3c: zeigen schematische Ansichten einer Kartuschenaufnahme und eines Kartuschensystems gemäß einer beispielhaften Ausführungsform der vorliegenden Erfindung.
- Figuren 4a und 4b: zeigen schematische Ansichten einer Kartuschenaufnahme und eines Kartuschensystems eingesetzt in eine Halteeinheit einer Getränkezubereitungsmaschine gemäß einer beispielhaftem Ausführungsform der vorliegenden Erfindung.
- Figuren 5a bis 6b: zeigen Detailansichten des Aufstechdorns der Kartuschenaufnahme gemäß einer beispielhaften Ausführungsform der vorliegenden Erfindung.
- Figuren 7a bis 7c: sind schematische Ansichten der Kartusche des Kartuschensystems gemäß einer beispielhaften Ausführungsform der vorliegenden Erfindung.
- Figuren 8a bis 8c: zeigen schematische Ansichten einer Kartuschenaufnahme der beispielshaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

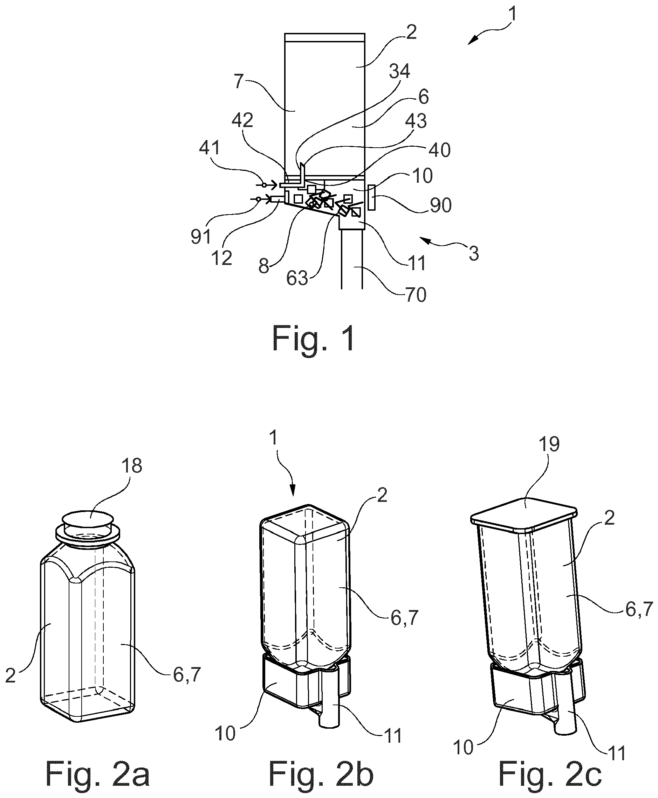

In **Figur 1** ist eine schematische Schnittbildansicht eines erfindungsgemäßen Kartuschensystems 1, welche in eine Getränkezubereitungsmaschine 3 eingesetzt ist und mittels welcher ein Getränk 70 zubereitet wird, gezeigt, um das allgemeine Funktionsprinzip zu illustrieren.

Das vorliegende System umfasst die Getränkezubereitungsmaschine 3 (nur schematisch illustriert), in welche austauschbare Kartuschensysteme 1 einsetzbar sind. Jedes Kartuschensystem 2 weist eine Kartusche 2, die mit einer bestimmten Getränkesubstanz 7 gefüllt ist, und eine mit der Kartusche 2 verbundene Kartuschenaufnahme 10 auf. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Es stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks 70 enthält, auswählen, in eine Halteeinheit 90 der Getränkezubereitungsmaschine 3 einsetzen und den Getränkeherstellungsprozess an der Getränkezubereitungsmaschine 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit 90 erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, um mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

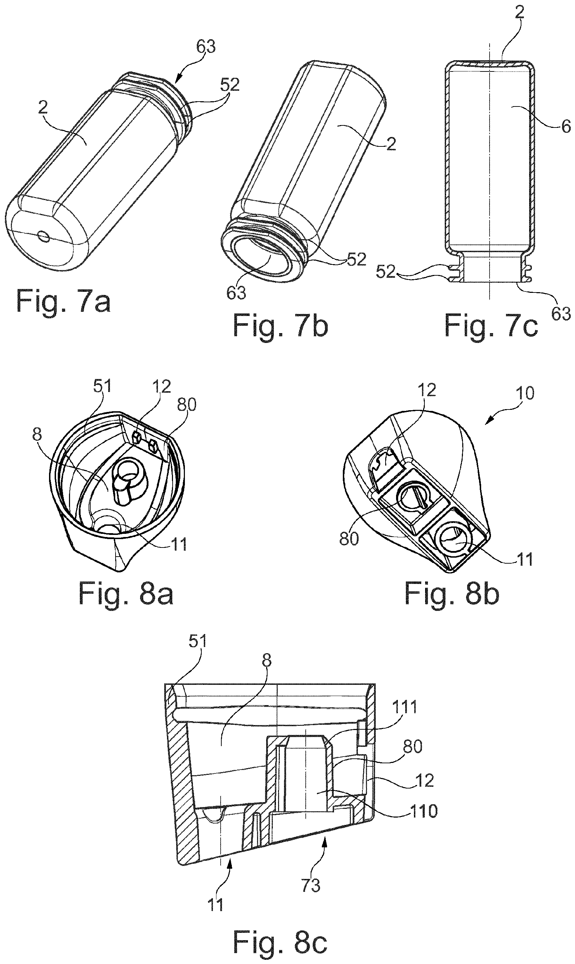

Das Kartuschensystem 1 umfasst eine Kartusche 2 in Form eines zylinderförmigen Behälters mit abgerundeten Ecken. Der Behälter ist hohl und beinhaltet somit ein Reservoir 6 für die Getränkesubstanz 7. Eine typische Kartusche 2 ist im Detail in Figuren 2a, 7a, 7b und 7c dargestellt. Die Kartusche 2 ist insbesondere aus Kunststoff gefertigt und durch ein Blas-Spritzform-Verfahren hergestellt. Die Kartusche 2 weist ferner eine Kartuschenöffnung 63 auf, durch welche das Reservoir 6 mit der flüssigen Getränkesubstanz 7 befüllt wird. Der Boden des Reservoirs 6 ist beim Beispiel der Figur 2a trichterförmig ausgebildet, wobei im Zentrum des trichterförmigen Bodens die Kartuschenöffnung 63 angeordnet ist. Die Kartusche 2 ist mit einer erfindungsgemäßen Kartuschenaufnahme 10 fest oder reversibel verbunden. Die Kartuschenaufnahme 10 wird insbesondere nach dem Befüllen der Kartusche 2 im Bereich der Kartuschenöffnung 63 auf die Kartusche 2 mittels einer Rastverbindung 50 verbunden. Die Kartuschenaufnahme 10 weist hierfür beispielsweise seitliche Rastelemente 51 in Form von elastischen Halteärmchen oder eine umlaufende Rastleiste 51 (Figuren 8a bis 8c) auf, welche einen (Figur 2a) oder zwei (Figuren 7a bis 7c) im Bereich der Kartuschenöffnung 63 angeordnete umlaufende Halteflansche 52 der Kartusche 2 umgreift. Die Kartuschenaufnahme 10 wird nach dem Befüllen der Kartusche 2 auf die Kartusche 2 geclipst. Die genaue Ausgestaltung der Kartuschenaufnahme 10 ist im Detail in Figuren 8a, 8b und 8c illustriert.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung 34 der Kartuschenaufnahme 10 die Getränkesubstanz 7 zumindest teilweise aus dem Reservoir 6 in die Mischkammer 8 überführt werden kann. Die Kartuschenentladeeinrichtung 34 umfasst zu diesem Zweck eine Druckluftleitung 40. Ein Ende der Druckluftleitung 40 ist mit einem Druckluftanschluss 42 verbunden, der mit einer Druckluftquelle 41 der Getränkezubereitungsmaschine 3 verbunden werden kann, um Druckluft in die Druckluftleitung 40 einzuleiten, während das andere Ende in einen Druckluftauslass 43 mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird.

In die Mischkammer 8 mündet ferner eine Fluidzuführung 12 der Kartuschenaufnahme 10, welche durch eine Fluidquelle 91 der Getränkezubereitungsmaschine 3 gespeist wird. Denkbar ist, dass die Fluidzuführung 12 eine Schnellkupplung aufweist, mit welcher die Fluidzuführung 12 an die Fluidquelle 91 der Getränkezubereitungsmaschine 3 angeschlossen werden kann. Die Schnellkupplung kann beispielsweise derart ausgebildet sein, dass beim Einsetzen des Kartuschensystems 1 in die Halteeinheit 90 automatisch eine Fluidverbindung zwischen der Fluidquelle 91 und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne dass Teile der Getränkezubereitungsmaschine 3 in Kontakt mit dem Getränk 70 gelangen. Auf diese Weise wird Rückkontamination der Getränkezubereitungsmaschine 3 verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit 90 entnommen, so dass die Getränkeherstellungsmaschine 3 mit einem neuen und unverbrauchten Kartuschensystem 1 bestückt werden kann. Die Kartuschenaufnahme 10 kann wiederverwendet werden, indem es von der benutzten Kartusche 2 durch Lösen der Rastverbindung 50 abgetrennt und auf eine neue Kartusche 2 geclipst wird.

In **Figuren 2a bis 2c** sind schematische Ansichten einer Kartusche 2, einer Kartuschenaufnahme 10 und eines Kartuschensystems 1 gemäß einer beispielhaften Ausführungsform der vorliegenden Erfindung illustriert.

Die Kartuschenaufnahme 10 ist auf die Kartusche 2 in oben beschriebener Weise aufgeclipst und weist die Mischkammer 8, den Getränkeauslauf 11, die Kartuschenentladeeinrichtung 34 und die Fluidzuführung 12 auf. Damit die Kartusche 2 während der Lagerung und des Transports des Kartuschensystems 1 aromadicht verschlossen ist, wird bei der vorliegenden Ausführungsform die Kartuschenöffnung 63 mit einem Dichtelement 18 in Form einer dünnen Dichtfolie verschlossen. Nach der Herstellung der Kartusche 2 im Blas-Spritzform-Verfahren wird die Dichtfolie auf den Rand der Kartuschenöffnung 63 geklebt oder gesiegelt (siehe Figur 2a). Erst anschließend wird die Kartuschenaufnahme 10 auf die Kartusche 2 aufgeclipst (siehe Figur 2b).

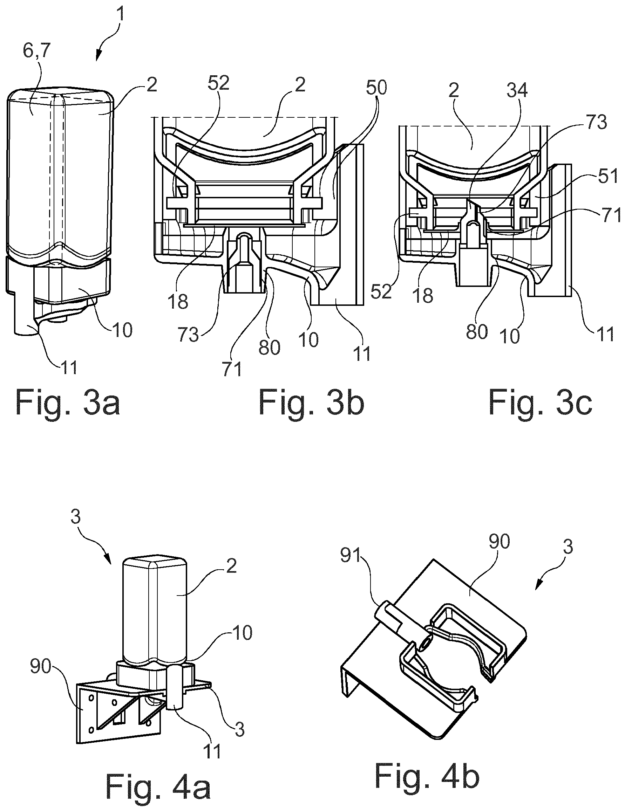

In Figur 2c ist eine Alternative gezeigt, in welcher die Kartusche 2 nicht im Blas-Spritzform-Verfahren, sondern im Spritzform-Verfahren hergestellt ist. Die Kartusche 2 weist hier eine weitere Kartuschenöffnung auf, die durch eine weitere Dichtfolie 19 verschlossen wird, indem die weitere Dichtfolie 19 analog auf den Rand der weiteren Kartuschenöffnung gesiegelt wird. Da hier zwei Siegelschritte notwendig sind, ist diese Alternative jedoch weniger bevorzugt. Die Figuren 3a bis 4a basieren daher wieder auf der in Figuren 2a und 2b gezeigten Kartusche 2.

In **Figuren 3a bis 3c** sind schematische Ansichten einer Kartuschenaufnahme 10 und eines Kartuschensystems 1 gemäß einer beispielhaften Ausführungsform der vorliegenden Erfindung illustriert.

Die Kartuschenaufnahme 10 weist eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (Vgl. Figur 3b), und einer ausgefahrenen Position, in welcher der Aufstechdorn 73 das Dichtelement 18 durchsticht (Vgl. Figur 3c) und bis in die Kartuschenöffnung 63 bzw. in das Reservoir 6 ragt, perforiert.

Die Außenwandung des Aufstechdorns 73 ist mit der Mehrzahl von Seitenkanälen 71 zum Leiten der Getränkesubstanz 7 vom Reservoir 6 in Richtung der Mischkammer 8, wenn das Dichtelement 18 durchstochen ist, versehen. Die Seitenkanäle 71 sind in Form von parallel zueinander verlaufenden einseitig offenen Nuten ausgebildet. Nach dem Durchstechen des Dichtelements 18 gelangen die Seitenkanäle 71 in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle 71 und/oder die Anzahl der Seitenkanäle 71 ist dabei vorzugsweise an die Viskosität der Getränkesubstanz 7 angepasst ist, so dass die Seitenkanäle 71 den Fluss der Getränkesubstanz 7 in Richtung Mischkammer 8 kontrollieren bzw. begrenzen. Bei einer hohen Viskosität werden mehrere Seitenkanäle 71 und/oder Seitenkanäle 71 mit größerem Querschnitt verwendet, während bei einer niedrigeren Viskosität weniger Seitenkanäle 71 und/oder Seitenkanäle 71 mit geringerem Querschnitt vorgesehen sind.

In den Aufstechdorn 73 ist ferner die Druckluftleitung 40 integriert, welche als Kartuschenentladeeinrichtung 34 fungiert. Die Druckluftleitung 40 mündet durch eine feststehende Druckluftspitze 72 am Ende des Aufstechdorns 73 in die Kartuschenöffnung 63, wenn sich der Aufstechdorn 73 in der ausgefahrenen Position befindet. Die Druckluftspitze 72 ragt also automatisch in die Kartuschenöffnung 63, wenn der Aufstechdorn 73 in die ausgefahrene Position verschoben wurde und infolgedessen das Dichtelement 18 durchstochen hat.

An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle 41 der Getränkezubereitungsmaschine 3 anschließbar ist. Vorzugsweise wird der Aufstechdorn 73 beim oder nach dem Einsetzen des Kartuschensystems 10 in die Getränkezubereitungsmaschine 3 oder nach dem Starten des Getränkeherstellungsprozesses von der eingefahrenen Position in die ausgefahrene Position überführt, vorzugsweise durch ein feststehendes Auslöseelement der Halteeinheit 90, gegen welches der Aufstechdorn 73 gedrückt wird.

Es ist vorzugsweise vorgesehen, dass sowohl die Fluidquelle 91 als auch die Druckluftquelle 41 direkt an die Fluidzuführung 12 bzw. den Druckluftanschluss 42 angekoppelt werden, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck stehen und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird.

In **Figuren 4a** ist schematische Ansicht einer Kartuschenaufnahme 10 und eines Kartuschensystems 1 gemäß der beispielhaften Ausführungsform der vorliegenden Erfindung eingesetzt in eine Halteeinheit 90 einer Getränkezubereitungsmaschine 3 dargestellt. In **Figur 4b** ist eine Detailansicht der Halteeinheit 90 gezeigt, welche im Wesentlichen aus einer Aufnahme für die Kartuschenaufnahme 10 besteht, sowie eine zur Fluidquelle 91 der Getränkezubereitungsmaschine 3 laufende Leitung zum Anschluss an die Fluidzuführung des Kartuschensystems 1 umfasst.

Die Halteeinheit 90 weist insbesondere einen Befestigungsflansch (nicht dargestellt) auf, welcher die Kartuschenaufnahme 10 nach dem Einsetzen in die Halteeinheit 90 formschlüssig umgreift. Die Halteeinheit 90 ist vorzugsweise manuell bedienbar, beispielsweise über einen Bedienhebel. Wenn ein Benutzer den Bedienhebel betätigt, wird die Kartuschenaufnahme 10 relativ zur Getränkezubereitungsmaschine 3 derart bewegt, dass das äußere Ende des Aufstechdorns 73 gegen ein feststehendes Auslöseelement (nicht dargestellt) der Halteeinheit 90 gedrückt wird, wodurch sich der Aufstechdorn 73 von der eingefahrenen Position in die ausgefahrene Position bewegt und das Dichtelement perforiert.

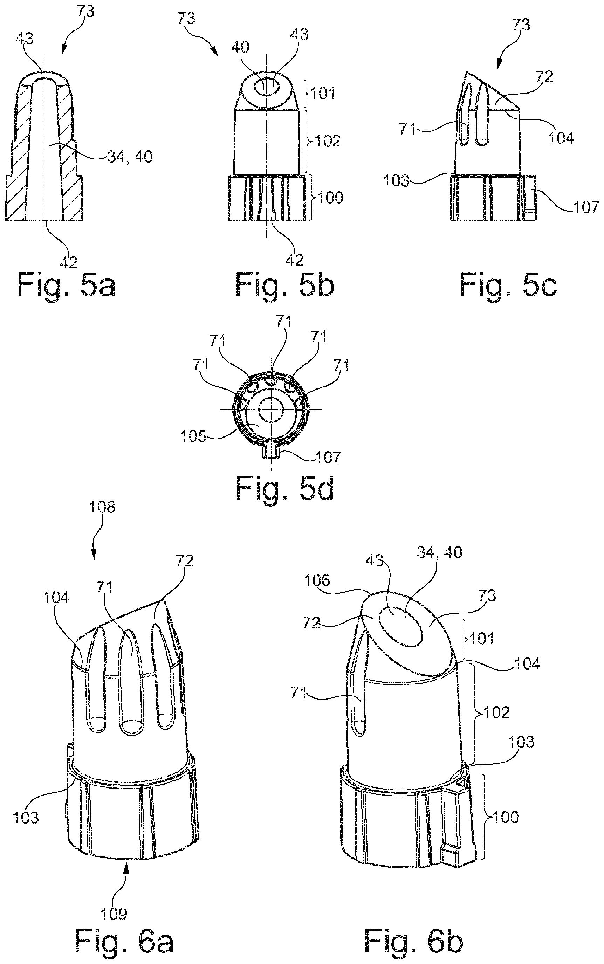

In **Figuren 5a, 5b, 5c, 5d, 6a und 6b** sind Detailansichten des Aufstechdorns 73 der Kartuschenaufnahme 10 gemäß einer beispielhaften Ausführungsform der vorliegenden Erfindung dargestellt.

In den Aufstechdorn 73 ist die entlang des Aufstechdorns 73 verlaufende Druckluftleitung 40 integriert. Die Druckluftleitung 40 verläuft von einem ersten Ende 109 des Aufstechdorns 73 bis zu einem zweiten Ende 108 des Aufstechdorns 73.

Der Aufstechdorn 73 ist im Wesentlichen einstückig aus drei Teilen aufgebaut: Ein zylinderförmiges Basisteil 100, ein sich in Richtung des Reservoirs 6 erstreckendes Aufstechteil 101 in Form eines schräg abgeschnittenen Kegelstumpfs und ein zwischen dem Basisteil 100 und dem Aufstechteil 101 angeordnetes Zwischenteil 102, welches kegelstumpfförmig ausgebildet ist. Zwischen dem Basisteil 100 und dem Zwischenteil 102 ist ein umlaufender Absatz 103 ausgebildet, während zwischen dem Aufstechteil 101 und dem Zwischenteil 102 eine umlaufende Kante 104 ausgebildet ist.

Durch die Ausbildung des Aufstechteils 101 als schräg abgeschnittener Kegelstumpf weist das Aufstechteil 101 eine schräge Schnittfläche 105 mit einem ovalen Umfang 106 auf, welcher teilweise als Schnittkante zum Perforieren des Dichtelements 18 fungiert. Derjenige Teil der Schnittkante, welcher am weitesten in Richtung des Reservoirs 6 vorsteht, zertrennt das Dichtelement 18 beim Perforieren desselben mit einem glatten Schnitt. Durch die schräge Schnittfläche 105 wird der teilweise vom Dichtelement 18 abgetrennte Teil des Dichtelements 18 aber nicht vollständig vom übrigen Dichtelement 18 abgetrennt, sondern der teilweise abgetrennte Teil des Dichtelements 18 rollt oder faltet sich teilweise über der Schnittfläche 105 zusammen. Somit wird verhindert, dass abgetrennte Teile des Dichtelements in die Mischkammer 8 gelangen.

Auf derjenigen Seite des Aufstechelements 73, welcher der Schnittfläche 105 gegenüberliegt, sind die Seitenkanäle 71 ausgebildet. Dies hat den Vorteil, dass die Seitenkanäle 71 im Bereich des glatten Schnittes im Dichtelement 18 angeordnet sind, wodurch die Getränkesubstanz 7 ungestört in die Seitenkanäle 71 gelangen kann. Vorzugsweise sind genau fünf nahezu parallel zueinander verlaufende Seitenkanäle 71 vorgesehen. Die Seitenkanäle 71 erstrecken sich jeweils vom Aufstechteil 101 über die umlaufende Kante 104 in das Zwischenteil 102, wodurch die Getränkesubstanz 7 besser in die Seitenkanäle 71 gelangen kann.

Der Druckluftauslass 43 liegt innerhalb der Schnittfläche 105, während der Drucklufteinlass bzw. -anschluss 42 im Basisteil 100 ausgebildet ist.

Am Basisteil 100 ist ferner eine Verdrehsicherung in Form eines vom Basisteil 100 radial abstehenden Steges 107 vorgesehen. Die Dornführung 80 weist innerhalb der Wandung des Führungskanals 110 eine zum Steg 107 korrespondierende Nut auf, so dass der Aufstechdorn 73 gegenüber der Dornführung 80 verdrehsicher gelagert ist.

Der Aufstechdorn 71 ist vorzugsweise als Kunststoffteil und besonders bevorzugt als Kunststoff-Spritzgussteil ausgebildet.

In den **Figuren 7a, 7b und 7c** sind schematische Ansichten der Kartusche 2 des Kartuschensystems 1 gemäß einer beispielhaften Ausführungsform gezeigt. Es ist zu sehen, dass die Kartusche 2 ein flaschenförmiges Objekt mit abgerundeten Kanten, abgeflachten Längsseiten und einer Kartuschenöffnung 63 umfasst. Im Bereich der Kartuschenöffnung 63 weist die Kartusche 2 zwei umlaufende Halteflansche 52 auf, auf welche die Kartuschenaufnahme 10 aufgeclipst wird.

Die **Figuren 8a, 8b und 8c** zeigen schematische Ansichten einer Kartuschenaufnahme 10 der beispielshaften Ausführungsform der vorliegenden Erfindung. Die Kartuschenaufnahme 10 weist beidseitig eine zumindest teilweise umlaufende Rastleiste 51 auf, mit welcher die Kartuschenaufname 10 auf die Halteflansche 52 der Kartusche 2 aufgeclipst wird. Ferner weist die Kartuschenaufnahme 10 eine Mischkammer 8 auf, in welche an ihrer rückwärtigen Seite die Fluidzuführung 12 in Form einer einfachen Durchgangsöffnung in der Wandung der Kartuschenaufnahme 10 ausgebildet ist. An der Vorderseite ist im Boden der Mischkammer 8 der Getränkeauslauf 11 ausgebildet. Der Boden der Mischkammer 8 bildet in Richtung des Getränkeauslaufs 11 eine sich stetig vertiefende Vertiefung, so dass nach Beendigung des Getränkeherstellungsprozesses keine Flüssigkeitsrückstände in der Mischkammer 8 verbleiben. Nahezu mittig innerhalb der Mischkammer 8 ist in den Figuren 8a bis 8c zudem die Dornführung 80 zu sehen,

Die Dornführung 80 umfasst ein Führungsteil mit einem innenliegenden Führungskanal 110, in welchem der Aufstechdorns 73 verschiebbar aufgenommen ist. Der Führungskanal 110 ist im Wesentlichen zylinderförmig ausgebildet ist und steht nahezu senkrecht vom Boden der Mischkammer 8 in Richtung der Kartusche 2 hervor. An einem der Kartusche 2 zugewandten Ende des Führungsteils ist ein umlaufender Anschlag 111 mit verringertem Durchmesser ausgebildet, an welchem der umlaufende Absatz 103 des Aufstechdorns 73 anschlägt, wenn der Aufstechdorn 73 in der ausgefahrenen Position ankommt. Der Anschlag begrenzt somit die Bewegung des Aufstechdorns 73 in Richtung des Reservoirs 6. Auf dem Boden der Mischkammer 8 sind optional Mischstrukturen angeordnet.

Durch die vorstehend beschriebene Verdrehsicherung in Form des Steges 107, der in die entsprechende Nut an der Dornführung 80 eingreift, wird eine Verdrehung des Aufstechdorns 73 bei der Überführung von der eingezogenen Position in die ausgefahrene Position verhindert. Zudem wird somit sichergestellt, dass die Seitenkanäle 71 stets auf derjenigen Halbseite des Aufstechdorns 73 angeordnet sind, welche dem Getränkeauslauf 11 der Mischkammer 8 abgewandt und der Fluidzuführung 12 zugewandt ist. Auf diese Weise wird eine verbesserte Durchmischung der Getränkesubstanz 7 und dem Fluid innerhalb der Mischkammer 8 erzielt.

In den Figuren 8a bis 8c aus Gründen der Übersichtlichkeit der Aufstechdorn 73 nicht dargestellt.

### Bezugszeichenliste

- 1: Kartuschensystem
- 2: Kartusche
- 3: Getränkezubereitungsmaschine
- 6: Reservoir
- 7: Getränkesubstanz
- 8: Mischkammer
- 10: Kartuschenaufnahme
- 11: Getränkeauslauf
- 12: Fluidzuführung
- 18: Dichtelement
- 19: Weiteres Dichtelement
- 34: Kartuschenentladeeinrichtung
- 40: Druckluftleitung
- 41: Druckluftquelle
- 42: Druckluftanschluss
- 43: Druckluftauslass
- 50: Rastverbindung
- 51: Rastelemente/Rastleiste
- 52: Halteflansch
- 63: Kartuschenöffnung
- 71: Seitenkanal
- 70: Getränk
- 73: Aufstechdorn
- 80: Dornführung
- 90: Halteeinheit
- 91: Fluidquelle
- 100: Basisteil
- 101: Aufstechteil
- 102: Zwischenteil
- 103: Absatz
- 104: Kante
- 105: Schnittfläche
- 106: Umfang
- 107: Steg
- 108: Erstes Ende
- 109: Zweites Ende
- 110: Führungskanal
- 111: Anschlag

## Patentansprüche

1. Kartuschenaufnahme (10) zur Herstellung eines Getränks (70) mittels einer Kartusche (2), die ein mit einer Getränkesubstanz (7) gefülltes Reservoir (6) umfasst, wobei die Kartuschenaufnahme (10) in eine Getränkezubereitungsmaschine (3) einsetzbar ist und mit der Kartusche (2) verbindbar ist, wobei die Kartuschenaufnahme (10) eine mit dem Reservoir (6) in Fluidverbindung bringbare Mischkammer (8) und eine in die Mischkammer (8) mündende Fluidzuführung (12) aufweist, wobei die Kartuschenaufnahme (10) eine Dornführung (80) und einen innerhalb der Dornführung (80) verschiebbar gelagerten Aufstechdorn (73) umfasst **dadurch gekennzeichnet, dass** der Aufstechdorn (73) zwischen einer eingefahrenen Position, in welcher der Aufstechdorn (73) von einem Dichtelement (18) der Kartusche (2) beabstandet ist, und einer ausgefahrenen Position, in welcher der Aufstechdorn (73) das Dichtelement (18) durchsticht und bis in das Reservoir (6) ragt, verschiebbar ist, wobei die Außenwandung des Aufstechdorns (73) wenigstens einen Seitenkanal (71) zum Leiten der Getränkesubstanz (7) in Richtung der Mischkammer (8), wenn das Dichtelement (18) durchstochen ist, aufweist.

2. Kartuschenaufnahme (10) nach Anspruch 1, wobei der Aufstechdorn (73) ein zylinder- oder kegelstumpfförmiges Basisteil (100) und ein sich in Richtung des Reservoirs (6) erstreckendes Aufstechteil (101) umfasst, wobei das Aufstechteil (101) in Form eines schräg abgeschnittenen Kegelstumpfs ausgebildet ist.

3. Kartuschenaufnahme (10) nach Anspruch 2, wobei der Aufstrechdorn (73) ein zwischen dem Basisteil (100) und dem Aufstechteil (101) angeordneten Zwischenteil (102) umfasst, welcher kegelstumpfförmig ausgebildet ist, wobei zwischen dem Basisteil (100) und dem Zwischenteil (102) ein umlaufender Absatz (103) ausgebildet ist und wobei zwischen dem Aufstechteil (101) und dem Zwischenteil (102) eine umlaufende Kante (104) ausgebildet ist.

4. Kartuschenaufnahme (10) nach Anspruch 3, wobei das Aufstechteil (101) derart ausgebildet ist, dass eine schräge Schnittfläche (105) des schräg abgeschnittenen Kegelstumpfs im Wesentlichen dem Reservoir (6) zugewandt ist, wobei der ovale Umfang (106) der Schnittfläche (105) zumindest teilweise eine Schnittkante zum Perforieren des Dichtelements (18) darstellt.

5. Kartuschenaufnahme (10) nach Anspruch 4, wobei die Kartuschenaufnahme (10) eine Mehrzahl von Seitenkanälen (71) aufweist, wobei sich jeder Seitenkanal (71) parallel zum Aufstechdorn (73) im Bereich des Aufstechteils (101) und im Bereich des Zwischenteils (102) erstreckt.

6. Kartuschenaufnahme (10) nach Anspruch 5, wobei die Seitenkanäle (71) jeweils in Form einer in die Außenfläche des Aufstechdorns (73) eingebrachte einseitig offene Nut ausgebildet sind.

7. Kartuschenaufnahme (10) nach einem der Ansprüche 5 oder 6, wobei die Seitenkanäle (71) zumindest teilweise in einem zur Schnittfläche (105) rückwärtigen Umfangsbereich des Aufstechdorns (72) ausgebildet sind.

8. Kartuschenaufnahme (10) nach einem der Ansprüche 5 bis 7, wobei die Seitenkanäle (71) auf derjenigen Seite des Aufstechdorns (72) ausgebildet sind, welche einem Getränkeauslauf (11) der Mischkammer (8) abgewandt und insbesondere der Fluidzuführung (12) zugewandt ist.

9. Kartuschenaufnahme (10) nach einem der vorherigen Ansprüche, wobei der Aufstechdorn (73) eine Verdrehsicherung in Form eines vom Basisteil (100) radial abstehenden Steges (107) aufweist.

10. Kartuschenaufnahme (10) nach einem der vorherigen Ansprüche, wobei der Aufstechdorn (73) eine integrierte Druckluftleitung (40), welche die Kartuschenentladeeinrichtung (34) ist, aufweist, wobei sich die Druckluftleitung (40) entlang des Aufstechdorns (73) insbesondere von einem ersten Ende (109) des Aufstechdorns (73) bis zu einem zweiten Ende (108) des Aufstechdorns (73) erstreckt.

11. Kartuschenaufnahme (10) nach Anspruch 10, wobei am zweiten Ende (109) ein Druckluftanschluss (42) zum Anschluss an eine Druckluftquelle (41) und am ersten Ende (108) ein Druckluftauslass (43) zum Einblasen von Druckluft in das Reservior (6) ausgebildet ist, wobei der Druckluftauslass (43) als Öffnung in der Schnittfläche (105) ausgebildet ist.

12. Kartuschenaufnahme (10) nach einem der Ansprüche 10 oder 11, wobei der Druckluftanschluss (42) als Öffnung im Basisteil (100) ausgebildet ist und wobei der Basisteil (100) derart in der Kartuschenaufnahme (10) angeordnet ist, dass der Druckluftanschluss (42) von außerhalb der Kartuschenaufnahme (10) zugänglich ist.

13. Kartuschenaufnahme (10) nach einem der vorhergehenden Ansprüche, wobei die Dornführung (80) ein Führungsteil mit einem innenliegenden Führungskanal (110) zur Aufnahme des Aufstechdorns (73) aufweist, wobei der Führungskanal (110) des Führungsteils im Wesentlichen zylinder-oder kegelstumpfförmig ausgebildet ist und wobei an einem der Kartusche (2) zugewandten Ende des Führungsteils ein umlaufender Anschlag (111) ausgebildet ist, welcher die Bewegung des Aufstechdorns (73) in Richtung des Reservoirs (6) begrenzt, wobei der Anschlag (111) insbesondere einen Bereich mit verringertem Durchmesser umfasst.

14. Kartuschenaufnahme (10) nach Anspruch 13, wobei innerhalb der Wandung des Führungskanals (110) eine zum Steg (107) korrespondierende Nut als Verdrehsicherung ausgebildet ist.

15. Kartuschenaufnahme (10) nach einem der Ansprüche 13 oder 14, wobei das Führungssteil in der Mischkammer (8) angeordnet ist und von einem Boden der Mischkammer (8) in Richtung der Kartusche (2) vorsteht.

16. Kartuschensystem (1) zur Herstellung eines Getränks (70), wobei das Kartuschensystem (1) in eine Getränkezubereitungsmaschine (3) einsetzbar ist, wobei das Kartuschensystem (1) eine Kartusche (2), die ein mit einer Getränkesubstanz (7) gefülltes Reservoir (6) umfasst, und eine mit der Kartusche (2) verbundene Kartuschenaufnahme (10) nach einem der vorhergehenden Ansprüche aufweist.

17. Getränkezubereitungsmaschine (3) zur Herstellung eines Getränks (70), in welche ein Kartuschensystem (1) nach Anspruch 16 einsetzbar ist, wobei die Getränkezubereitungsmaschine (3) eine Halteeinheit (90) aufweist, in welche die mit der Kartusche (2) verbundene Kartuschenaufnahme (10) einsetzbar ist, eine Fluidquelle (91) zum Einspeisen des Fluids in die Fluidzuführung (12) und eine Druckluftquelle (41) zum Einblasen von Druckluft in den Druckluftanschluss (42).

18. Verfahren zur Herstellung eines Getränks (70) mit einem Kartuschensystem (1) nach Anspruch 16, mit den folgenden Schritten:
- Einsetzen des Kartuschensystems (1) in eine Halteeinheit (90) einer Getränkezubereitungsmaschine (3),
- Herstellen einer Fluidverbindung zwischen einer Fluidquelle (91) der Getränkezubereitungsmaschine (3) und der Fluidzuführung (12) der Kartuschenaufnahme (10),
- Herstellen einer Druckluftverbindung zwischen einer Druckluftquelle (41) der Getränkezubereitungsmaschine (3) und des Druckluftanschlusses (42) der Kartuschenaufnahme (10),
- Perforieren des Dichtelements (18) durch Überführen des Aufstechdorns (73) von der eingefahrenen Position in die ausgefahrene Position,
- Überführen der Getränkesubstanz (7) von dem Reservoir (6) in die Mischkammer (8) durch Einspeisen von Druckluft in das Reservoir (12),
- Einspeisen eines Fluides in die Mischkammer (8) durch die Fluidzugührung (12) und
- Ableiten des in der Mischkammer (8) durch Vermischung der Getränkesubstanz (7) mit dem Fluid erzeugten Getränks (70) mittels eines Getränkeauslaufs (11).

## Claims

1. Cartridge receptacle (10) for producing a beverage (70) by means of a cartridge (2) which comprises a reservoir (6) filled with a beverage substance (7), wherein the cartridge receptacle (10) is insertable into a beverage preparation machine (3) and is connectable to the cartridge (2), wherein the cartridge receptacle (10) has a mixing chamber (8) that is fluidically connectable to the reservoir (6) and a fluid feed (12) that leads into the mixing chamber (8), wherein the cartridge receptacle (10) comprises a spike guide (80) and a piercing spike (73) mounted in a displaceable manner within the spike guide (80), **characterized in that** the piercing spike (73) is displaceable between a retracted position, in which the piercing spike (73) is spaced apart from a sealing element (18) of the cartridge (2), and an extended position, in which the piercing spike (73) pierces the sealing element (18) and projects into the reservoir (6), wherein the outer wall of the piercing spike (73) has at least one lateral channel (71) for conveying the beverage substance (7) in the direction of the mixing chamber (8) when the sealing element (18) is pierced.

2. Cartridge receptacle (10) according to Claim 1, wherein the piercing spike (73) comprises a cylindrical or frustoconical base part (100) and a piercing part (101) that extends in the direction of the reservoir (6), wherein the piercing part (101) is configured in the form of an obliquely truncated cone.

3. Cartridge receptacle (10) according to Claim 2, wherein the piercing spike (73) comprises an intermediate part (102) arranged between the base part (100) and the piercing part (101), said intermediate part being configured in a frustoconical manner, wherein a circumferential shoulder (103) is formed between the base part (100) and the intermediate part (102), and wherein a circumferential edge (104) is formed between the piercing part (101) and the intermediate part (102) .

4. Cartridge receptacle (10) according to Claim 3, wherein the piercing part (101) is configured such that an oblique cut face (105) of the obliquely truncated cone substantially faces the reservoir (6), wherein the oval circumference (106) of the cut face (105) at least partially represents a cutting edge for perforating the sealing element (18) .

5. Cartridge receptacle (10) according to Claim 4, wherein the cartridge receptacle (10) has a plurality of lateral channels (71), wherein each lateral channel (71) extends parallel to the piercing spike (73) in the region of the piercing part (101) and in the region of the intermediate part (102).

6. Cartridge receptacle (10) according to Claim 5, wherein the lateral channels (71) are each configured in the form of a groove, open on one side, introduced into the outer face of the piercing spike (73).

7. Cartridge receptacle (10) according to either of Claims 5 and 6, wherein the lateral channels (71) are formed at least partially in a rear circumferential region, with respect to the cut face (105), of the piercing spike (72).

8. Cartridge receptacle (10) according to one of Claims 5 to 7, wherein the lateral channels (71) are formed on that side of the piercing spike (72) that faces away from a beverage outlet (11) of the mixing chamber (8) and in particular faces the fluid feed (12) .

9. Cartridge receptacle (10) according to one of the preceding claims, wherein the piercing spike (73) has a twist prevention means in the form of a rib (107) protruding radially from the base part (100).

10. Cartridge receptacle (10) according to one of the preceding claims, wherein the piercing spike (73) has an integrated compressed-air line (40), which is the cartridge emptying device (34), wherein the compressed-air line (40) extends along the piercing spike (73) in particular from a first end (109) of the piercing spike (73) to a second end (108) of the piercing spike (73).

11. Cartridge receptacle (10) according to Claim 10, wherein a compressed-air connection (42) for connecting to a compressed-air source (41) is formed at the second end (109), and a compressed-air outlet (43) for blowing compressed air into the reservoir (6) is formed at the first end (108), wherein the compressed-air outlet (43) is configured as an opening in the cut face (105).

12. Cartridge receptacle (10) according to either of Claims 10 and 11, wherein the compressed-air connection (42) is configured as an opening in the base part (100), and wherein the base part (100) is arranged in the cartridge receptacle (10) such that the compressed-air connection (42) is accessible from outside the cartridge receptacle (10) .

13. Cartridge receptacle (10) according to one of the preceding claims, wherein the spike guide (80) has a guide part with an internal guide channel (110) for receiving the piercing spike (73), wherein the guide channel (110) of the guide part is configured in a substantially cylindrical or frustoconical manner, and wherein a circumferential stop (111) is formed at an end of the guide part that faces the cartridge (2), said stop limiting the movement of the piercing spike (73) in the direction of the reservoir (6), wherein the stop (111) comprises in particular a region with a reduced diameter.

14. Cartridge receptacle (10) according to Claim 13, wherein a groove corresponding to the rib (107) is formed as twist prevention means within the wall of the guide channel (110).

15. Cartridge receptacle (10) according to either of Claims 13 and 14, wherein the guide part is arranged in the mixing chamber (8) and protrudes from a bottom of the mixing chamber (8) in the direction of the cartridge (2).

16. Cartridge system (1) for producing a beverage (70), wherein the cartridge system (1) is insertable into a beverage preparation machine (3), wherein the cartridge system (1) has a cartridge (2), which comprises a reservoir (6) filled with a beverage substance (7), and a cartridge receptacle (10), connected to the cartridge (2), according to one of the preceding claims.

17. Beverage preparation machine (3) for producing a beverage (70), into which a cartridge system (1) according to Claim 16 is insertable, wherein the beverage preparation machine (3) has a retaining unit (90) into which the cartridge receptacle (10) connected to the cartridge (2) is insertable, a fluid source (91) for injecting the fluid into the fluid feed (12), and a compressed-air source (41) for blowing compressed air into the compressed-air connection (42).

18. Method for producing a beverage (70) with a cartridge system (1) according to Claim 16, having the following steps:
- inserting the cartridge system (1) into a retaining unit (90) of a beverage preparation machine (3),
- establishing a fluidic connection between a fluid source (91) of the beverage preparation machine (3) and the fluid feed (12) of the cartridge receptacle (10),
- establishing a compressed-air connection between a compressed-air source (41) of the beverage preparation machine (3) and the compressed-air connection (42) of the cartridge receptacle (10),
- perforating the sealing element (18) by transferring the piercing spike (73) from the retracted position into the extended position,
- transferring the beverage substance (7) from the reservoir (6) into the mixing chamber (8) by injecting compressed air into the reservoir (12),
- injecting a fluid into the mixing chamber (8) through the fluid feed (12), and
- discharging the beverage (70) created in the mixing chamber (8) by blending the beverage substance (7) with the fluid, by means of a beverage outlet (11).

## Revendications

1. Réceptacle de cartouche (10) destiné à produire une boisson (70) au moyen d'une cartouche (2) qui comprend un réservoir (6) rempli d'une substance de boisson (7), le réceptacle de cartouche (10) pouvant être inséré dans une machine de préparation de boisson (3) et pouvant être relié à la cartouche (2), le réceptacle de cartouche (10) comportant une chambre de mélange (8) qui peut être reliée fluidiquement au réservoir (6) et une amenée de fluide (12) débouchant dans la chambre de mélange (8), le réceptacle de cartouche (10) comprenant un guide de mandrin (80) et un mandrin de perçage (73) monté de manière coulissante à l'intérieur du guide de mandrin (80), **caractérisé en ce que** le mandrin de perçage (73) peut coulisser entre une position rétractée, dans laquelle le mandrin de perçage (73) est espacé d'un élément d'étanchéité (18) de la cartouche (2), et une position sortie dans laquelle le mandrin de perçage (73) transperce l'élément d'étanchéité (18) et fait saillie dans le réservoir (6), la paroi extérieure du mandrin de perçage (73) comportant au moins un conduit latéral (71) destiné à diriger la substance de boisson (7) en direction de la chambre de mélange (8) lorsque l'élément d'étanchéité (18) est transpercé.

2. Réceptacle de cartouche (10) selon la revendication 1, le mandrin de perçage (73) comprenant une partie de base cylindrique ou tronconique (100) et une partie de perçage (101) s'étendant en direction du réservoir (6), la partie de perçage (101) étant conçue sous la forme d'un cône tronqué coupé obliquement.

3. Réceptacle de cartouche (10) selon la revendication 2, le mandrin de perçage (73) comprenant une partie intermédiaire (102) qui est disposée entre la partie de base (100) et la partie de perçage (101) et qui est conçue sous la forme d'un cône tronqué, un gradin circonférentiel (103) étant formé entre la partie de base (100) et la partie intermédiaire (102), et un bord circonférentiel (104) étant formé entre la partie de perçage (101) et la partie intermédiaire (102) .

4. Réceptacle de cartouche (10) selon la revendication 3, la partie de perçage (101) étant conçue de telle sorte qu'une surface de coupe inclinée (105) du cône tronqué coupé obliquement est dirigée sensiblement vers le réservoir (6), la circonférence ovale (106) de la surface de coupe (105) représentant au moins partiellement un bord de coupe destiné à perforer l'élément d'étanchéité (18).

5. Réceptacle de cartouche (10) selon la revendication 4, le réceptacle de cartouche (10) comportant une pluralité de conduits latéraux (71), chaque conduit latéral (71) s'étendant parallèlement au mandrin de perçage (73) dans la région de la partie de perçage (101) et dans la région de la partie intermédiaire (102).

6. Réceptacle de cartouche (10) selon la revendication 5, les conduits latéraux (71) étant chacun conçus sous la forme d'une rainure qui est ouverte sur un côté et qui est ménagée dans la surface extérieure du mandrin de perçage (73).

7. Réceptacle de cartouche (10) selon l'une des revendications 5 et 6, les conduits latéraux (71) étant ménagés au moins partiellement dans une région circonférentielle arrière, par rapport à la surface de coupe (105), du mandrin de perçage (72).

8. Réceptacle de cartouche (10) selon l'une des revendications 5 à 7, les conduits latéraux (71) étant ménagés sur le côté du mandrin de perçage (72) qui est dirigé à l'opposé d'une sortie de boisson (11) de la chambre de mélange (8) et en particulier vers l'amenée de fluide (12).

9. Réceptacle de cartouche (10) selon l'une des revendications précédentes, le mandrin de perçage (73) comportant un dispositif anti-torsion se présentant sous la forme d'une nervure (107) faisant saillie radialement depuis la partie de base (100).

10. Réceptacle de cartouche (10) selon l'une des revendications précédentes, le mandrin de perçage (73) comportant un conduit d'air comprimé intégré (40) qui est le dispositif de purge de cartouche (34), le conduit d'air comprimé (40) s'étendant le long du mandrin de perçage (73) en particulier depuis une première extrémité (109) du mandrin de perçage (73) jusqu'à une deuxième extrémité (108) du mandrin de perçage (73).

11. Réceptacle de cartouche (10) selon la revendication 10, un raccord d'air comprimé (42) étant prévu à la deuxième extrémité (109) pour être relié à une source d'air comprimé (41) et une sortie d'air comprimé (43) étant prévue à la première extrémité (108) pour souffler de l'air comprimé dans le réservoir (6), la sortie d'air comprimé (43) étant conçue comme une ouverture ménagée dans la surface de coupe (105).

12. Réceptacle de cartouche (10) selon l'une des revendications 10 et 11, le raccord d'air comprimé (42) étant conçu comme une ouverture ménagée dans la partie de base (100) et la partie de base (100) étant disposée dans le réceptacle de cartouche (10) de telle sorte que le raccord d'air comprimé (42) soit accessible depuis l'extérieur du réceptacle de cartouche (10).

13. Réceptacle de cartouche (10) selon l'une des revendications précédentes, le guide de mandrin (80) comportant une partie de guidage pourvue d'un conduit de guidage intérieur (110) destiné à recevoir le mandrin de perçage (73), le conduit de guidage (110) de la partie de guidage étant sensiblement cylindrique ou tronconique, et une butée circonférentielle (111) qui limite le déplacement du mandrin de perçage (73) en direction du réservoir (6) étant formée à une extrémité de la partie de guidage qui est dirigée vers la cartouche (2), la butée (111) comprenant notamment une zone de diamètre réduit.

14. Réceptacle de cartouche (10) selon la revendication 13, une rainure correspondant à la nervure (107) étant conçue comme sécurité anti-rotation à l'intérieur de la paroi du conduit de guidage (110).

15. Réceptacle de cartouche (10) selon l'une des revendications 13 et 14, la partie de guidage étant disposée dans la chambre de mélange (8) et faisant saillie depuis un fond de la chambre de mélange (8) en direction de la cartouche (2).

16. Système de cartouche (1) destiné à produire une boisson (70), le système de cartouche (1) pouvant être utilisé dans une machine de préparation de boisson (3), le système de cartouche (1) comportant une cartouche (2), qui comprend un réservoir (6) rempli d'une substance de boisson (7), et un réceptacle de cartouche (10) selon l'une des revendications précédentes relié à la cartouche (2).

17. Machine de préparation de boisson (3) destinée à produire une boisson (70), machine dans laquelle un système de cartouche (1) selon la revendication 16 peut être inséré, la machine de préparation de boisson (3) comportant une unité de retenue (90) dans laquelle le réceptacle de cartouche (10) relié à la cartouche (2) peut être inséré, une source de fluide (91) destinée à injecter le fluide dans l'amenée de fluide (12) et une source d'air comprimé (41) destinée à souffler de l'air comprimé dans le raccord d'air comprimé (42).

18. Procédé de production d'une boisson (70) avec un système de cartouche (1) selon la revendication 16, ledit procédé comprenant les étapes suivantes :
- insérer le système de cartouche (1) dans une unité de retenue (90) d'une machine de préparation de boissons (3),
- établir une liaison fluidique entre une source de fluide (91) de la machine de préparation de boissons (3) et l'amenée de fluide (12) du réceptacle de cartouche (10),
- établir une liaison d'air comprimé entre une source d'air comprimé (41) de la machine de préparation de boissons (3) et le raccord d'air comprimé (42) du réceptacle de cartouche (10),
- perforer l'élément d'étanchéité (18) par transfert du mandrin de perçage (73) de la position rétractée à la position sortie,
- transférer la substance de boisson (7) du réservoir (6) dans la chambre de mélange (8) par injection d'air comprimé dans le réservoir (12),
- injecter un fluide dans la chambre de mélange (8) à travers l'amenée de fluide (12) et
- délivrer la boisson (70), produite dans la chambre de mélange (8) par mélange de la substance de boisson (7) avec le fluide, au moyen d'une sortie de boisson (11) .
